# EUROPÄISCHE PATENTANMELDUNG

(11) **EP 3 904 842 A1**
(43) Veröffentlichungstag der Anmeldung: **03.11.2021**
(21) Anmeldenummer: 21169217.3
(22) Anmeldetag: 19.04.2021
(51) Int. Cl.: G01F 23/00

(54) **VORRICHTUNG UND VERFAHREN ZUM BEREITSTELLEN EINER SIGNALFARBE FÜR EIN FÜLLSTANDMESSGERÄT**

(30) Priorität: 29.04.2020 WO PCT/EP2020/061905
(71) Anmelder: VEGA Grieshaber KG, 77709 Wolfach (DE)
(72) Erfinder: LAUN, Robert, 77756 Hausach (DE)
(74) Vertreter: Maiwald Patent- und Rechtsanwaltsgesellschaft mbH

(57) **Zusammenfassung**

Vorrichtung (100) zum Bereitstellen von mindestens einer Signalfarbe für ein Füllstandmessgerät, wobei die Vorrichtung (100) umfasst: eine Parametrierungseinrichtung (10), welche dazu ausgebildet ist, eine Signalfarbe für einen Verbund von Füllstandmessgeräten bereitzustellen; und eine Sendeeinrichtung (20), welche dazu ausgebildet ist, die bereitgestellte Signalfarbe als Signalfarbdaten an den Verbund der Füllstandmessgeräte zu übertragen.

## Beschreibung

Die vorliegende Anmeldung beansprucht die Priorität der internationalen Patentanmeldung Nr. PCT/EP2020/061905, eingereicht am 29. April 2020, die in vollem Umfang durch Bezugnahme in das vorliegende Dokument aufgenommen wird.

### Gebiet der Erfindung

Die vorliegende Erfindung betrifft im Allgemeinen Anzeigecodierungen für Füllstandmessgeräte. Insbesondere betrifft die vorliegende Erfindung eine Vorrichtung zum Bereitstellen einer Signalfarbe für ein Füllstandmessgerät, ein Verfahren zum Bereitstellen einer Signalfarbe für ein Füllstandmessgerät, und eine entsprechende Datenstruktur.

### Hintergrund

Die DE 10 2018 200 261 A1 beschreibt eine Anzeigeeinheit für ein Füllstandmessgerät, Druckmessgerät, Durchflussmessgerät oder Grenzstandsensor mit einer Kodierungseinheit und einem Display. Die Kodierungseinheit wandelt Messdaten und/oder Statusdaten des Messgeräts oder Sensors in einen zweidimensionalen grafischen Code um. Das Display ist eingerichtet, den grafischen Code derart anzuzeigen, dass er für eine Kameraeinheit eines externen Terminals, beispielsweise eines Smartphones, erfassbar ist.

### Zusammenfassung der Erfindung

Es ist eine Aufgabe der Erfindung, eine Vorrichtung anzugeben bzw. bereitzustellen, welche eine möglichst schnelle und fehlerfrei Anzeige von Zuständen und Verbund-Hierarchien für Füllstandmessgeräte darstellen kann.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft eine Vorrichtung zum Bereitstellen einer Signalfarbe für ein Füllstandmessgerät, wobei die Vorrichtung umfasst: eine Parametrierungseinrichtung, welche dazu ausgebildet ist, eine Signalfarbe für einen Verbund von Füllstandmessgeräten bereitzustellen; und eine Sendeeinrichtung, welche dazu ausgebildet ist, die bereitgestellte Signalfarbe als Signalfarbdaten an den Verbund der Füllstandmessgeräte zu übertragen.

Die vorliegende Erfindung ermöglicht vorteilhaft, dass ein Verfahren bereitgestellt wird, durch welches eine konsistente Anzeige des Anlagenzustands durch einheitliche farbige Beleuchtung der Geräte bei einem Master-Slave Betrieb gewährleistet wird. Mit anderen Worten, die vorliegende Erfindung ermöglicht vorteilhaft, eine Verbund-Hierarchie für Füllstandmessgeräte kann eine Master-Slave Konfiguration, oder eine Stern-Konfiguration, oder eine kaskadierte Netzwerkstruktur sein, die Verbund-Hierarchie kann die Steuerung betreffen.

Ferner kann die Verbund-Hierarchie für Füllstandmessgeräte asymmetrisch aufgebaut sein, im Sendeaufruf, Empfangsaufruf, etwa Master-Slave Konfiguration, oder auch symmetrisch ausgebildet sein, im Konkurrenzbetrieb.

Die vorliegende Erfindung ermöglicht vorteilhaft, dass farbige Statusanzeigen von einzelnen Geräten durch z.B. einen Leuchtring oder farbige Hintergrundbeleuchtung dargestellt werden.

Die vorliegende Erfindung ermöglicht vorteilhaft, dass wenn mehrere Geräte über einen Bus - drahtgebunden oder drahtlos - miteinander gekoppelt werden, entsteht ein Gerätesystem mit mehreren Geräten, die gemeinsam eine Messaufgabe erfüllen und einem Gesamtzustand, der meist durch den Master ermittelt wird.

Da der Master nicht unbedingt an einer Position sitzt, die durch den Bediener einsehbar ist, oder es nicht ersichtlich ist, welche Gerät denn alle an diesem System beteiligt sind. Wäre es sinnvoll, alle Geräte, die zusammen eine Messaufgabe erfüllen, mit der gleichen Farbe leuchten zu lassen.

Die vorliegende Erfindung hat mehrere Vorteile: sämtliche Füllstandmessgeräte, die an der Messaufgabe beteiligt sind und in der gleichen Farbe leuchten, sind gut von anderen Geräten unterscheidbar.

Die vorliegende Erfindung hat den weiteren Vorteil, dass im Fehlerfall alle Geräte mit der Fehlerfarbe markiert werden und es ist sofort ersichtlich, welches System fehlerhaft ist und eine effektive und sichere Anzeigecodierungen für Füllstandmessgeräte bereitgestellt wird.

Die vorliegende Erfindung hat den weiteren Vorteil, dass falls das Füllstandmessgerät dasjenige Gerät ist, das den Fehler verursacht hat, dies durch ein zusätzliches Blinken oder eine wechselnde Farbe - Systemfarbe und/oder Fehlerfarbe - angezeigt werden kann, so dass eine Fehlerlokalisierung durch den Benutzer visuell möglich ist.

Um dies zu erreichen, werden beispielsweise an den Master die aktuelle Systemfarbe sowie auch an alle beteiligten Slaves zyklisch übermittelt gemäß einem Ausfuhrungsbeispiel der vorliegenden Erfindung.

Die vorliegende Erfindung ermöglicht vorteilhaft eine konsistente und einheitliche farbige Statusanzeige der Feldgeräte bei verbundenen Geräten, beispielsweise im Master-Slave-Betrieb.

Gemäß einer Ausführungsform der Erfindung ist vorgesehen, dass die Parametrierungseinrichtung dazu ausgebildet ist, die Signalfarbe als Farbe zur Identifizierung eines Master-Slave-Verbundes der Füllstandmessgeräte bereitzustellen.

Gemäß einer Ausführungsform der Erfindung ist vorgesehen, dass die Sendeeinrichtung dazu ausgebildet ist, die Signalfarbdaten synchron, asynchron oder zyklisch zu übertragen.

Gemäß einer Ausführungsform der Erfindung ist vorgesehen, dass die Parametrierungseinrichtung ferner dazu ausgebildet ist, eine Fehlerfarbe für den Verbund der Füllstandmessgeräten bereitzustellen und die Sendeeinrichtung ist ferner dazu ausgebildet, die bereitgestellte Fehlerfarbe als Fehlerfarbdaten an den Verbund der Füllstandmessgeräte zu übertragen.

Gemäß einer Ausführungsform der Erfindung ist vorgesehen, dass die Sendeeinrichtung dazu ausgebildet ist, die Fehlerfarbdaten synchron, asynchron oder zyklisch zu übertragen.

Gemäß einer Ausführungsform der Erfindung ist vorgesehen, dass die Signalfarbdaten für ein Füllstandmessgerät dazu geeignet sind, eine Zugehörigkeit des Füllstandmessgerätes zu dem Verbund der Füllstandmessgeräte anzuzeigen.

Ein weiterer Aspekt der Erfindung betrifft ein Füllstandmessgerät zur Bestimmung eines Füllstandes eines Mediums, das Füllstandmessgerät aufweisend: eine Empfangseinrichtung, welche dazu ausgebildet ist, Farbdaten von einer Vorrichtung nach einer der vorhergehenden Ausfuhrungsform bzw. nach dem ersten Aspekt zu empfangen.

Gemäß einer Ausführungsform der Erfindung ist vorgesehen, dass das Füllstandmessgerät ferner aufweist: eine Anzeigeneinrichtung, welcher dazu ausgebildet ist, die empfangenen Signalfarbdaten und/oder Fehlerfarbdaten anzuzeigen und eine Signalfarbe und/oder eine Fehlerfarbe auszugeben.

Gemäß einer Ausführungsform der Erfindung ist vorgesehen, dass die Anzeigeneinrichtung als eine Leuchtanzeige oder als Hintergrundbeleuchtung eines Displays des Füllstandmessgerätes ausgebildet ist. Die Anzeigeneinrichtung kann ein elektrisches Leuchtmittel wie eine LED oder eine Segmentanzeige oder eine Matrixanzeige umfassen.

Gemäß einer Ausführungsform der Erfindung ist vorgesehen, dass die Anzeigeneinrichtung ausgebildet, als NAMUR-Signalanzeige verwendet zu werden.

Ein weiterer Aspekt der Erfindung betrifft ein Verfahren zum Bereitstellen einer Signalfarbe für ein Füllstandmessgerät, wobei das Verfahren folgende Verfahrensschritte aufweist: Bereitstellen einer Signalfarbe für einen Verbund von Füllstandmessgeräten; und Übertragen der bereitgestellten Signalfarbe als Signalfarbdaten an den Verbund der Füllstandmessgeräte zu übertragen.

Gemäß einer Ausführungsform der Erfindung ist vorgesehen, dass ferner die Signalfarbe als Farbe zur Identifizierung eines Master-Slave-Verbundes der Füllstandmessgeräte bereitgestellt wird.

Gemäß einer Ausführungsform der Erfindung ist vorgesehen, dass die Signalfarbdaten synchron, asynchron oder zyklisch übertragen werden.

Gemäß einer Ausführungsform der Erfindung ist vorgesehen, dass eine Fehlerfarbe für den Verbund der Füllstandmessgeräten bereitgestellt wird und die bereitgestellte Fehlerfarbe als Fehlerfarbdaten an den Verbund der Füllstandmessgeräte übertragen werden.

Gemäß einer Ausführungsform der Erfindung ist vorgesehen, dass die Fehlerfarbdaten synchron, asynchron oder zyklisch übertragen werden.

Ein weiterer Aspekt der Erfindung betrifft eine Datenstruktur für die Datenübertragung zwischen einer Vorrichtung nach einem der vorhergehenden Ansprüche und mindestens zwei Füllstandmessgeräten, wobei die Datenstruktur aufweist: Signalfarbdaten und/oder Fehlerfarbdaten.

Die oben und im Folgenden beschriebenen Merkmale können auch in anderen Messgeräteschaltungen umgesetzt werden. An dieser Stelle sei darauf hingewiesen, dass im Hinblick auf das Verfahren beschriebenen Merkmale von den Elementen der Messgeräteschaltungen und verschiedenen Füllstandradarsystemen implementiert werden können.

Als Füllstandradarsysteme können beispielsweise radiometrisches Messsysteme verwendet werden, welche über die Messgrößen Dichte, Grenzstand, oder Massenfluss einen Füllstand eines Behälters bestimmen.

Die beschriebenen Ausgestaltungen und Weiterbildungen lassen sich beliebig miteinander kombinieren.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsformen beschriebenen Merkmale der vorliegenden Erfindung.

Die beiliegenden Zeichnungen sollen ein weiteres Verständnis der Ausführungsformen der vorliegenden Erfindung vermitteln.

Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Figuren der Zeichnungen. Die dargestellten Elemente der Figuren der Zeichnungen sind nicht notwendigerweise maßstabsgetreu zueinander gezeigt.

### Kurze Beschreibung der Figuren

Fig. 1 zeigt eine Vorrichtung zum Bereitstellen einer Signalfarbe für ein Füllstandmessgerät gemäß einer Ausführungsform der Erfindung.
Fig. 2 zeigt eine Vorrichtung zum Bereitstellen einer Signalfarbe für ein Füllstandmessgerät gemäß einer Ausführungsform der Erfindung.
Fig. 3 zeigt ein Füllstandsmessgerät gemäß einer Ausführungsform der Erfindung.
Fig. 4 zeigt ein Flussdiagramm eines Verfahrens zum Bereitstellen einer Signalfarbe für ein Füllstandmessgerät gemäß einer Ausführungsform der Erfindung.

### Detaillierte Beschreibung von Ausführungsformen

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

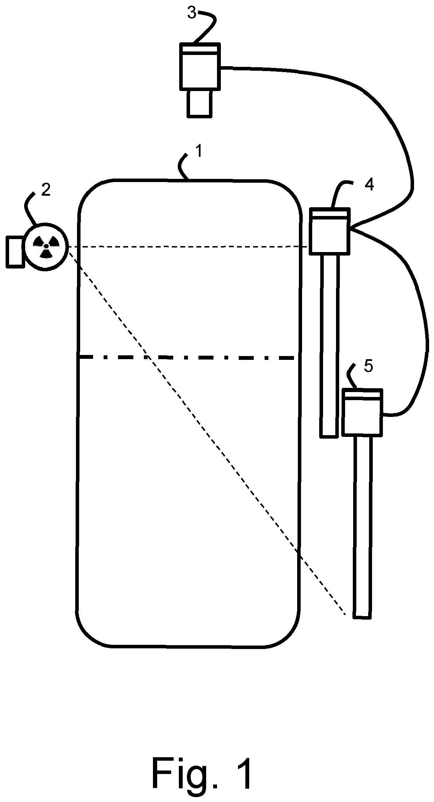

Fig. 1 zeigt eine Vorrichtung zum Bereitstellen einer Signalfarbe für ein Füllstandmessgerät gemäß einer Ausführungsform der Erfindung.

Der Begriff "Parametrierung" wie von der vorliegenden Erfindung verwendet, kann als Begriff für beispielsweise jegliche Customizing-, Initialisierung-, oder Kalibrierungs-Aktivitäten verstanden werden, die ein Setzen oder Festlegen von Farbparametern oder -werten für ein Füllstandmessgerät oder einen beliebigen Verbund von Füllstandmessgeräten vornimmt.

Gemäß einer Ausführungsform der Erfindung wird ein Behälter 1 von einer radioaktiven Quelle 2 durchstrahlt, wie in der Fig. 1 dargestellt.

Ein Fremdstrahlungserkennungssensor 3 ist gemäß einer Ausführungsform der Erfindung mit einem Leuchtmittel ausgebildet, wobei das Leuchtmittel als ein Leuchtring ausgebildet sein kann, und etwa eine violette Signalfarbe ausgibt.

Ein Füllstandmessgerät 4 kann gemäß einer Ausführungsform der Erfindung als Slave einer Master-Slave-Anordnung ausgebildet sein und mit einem Leuchtmittel ausgebildet sein, wobei das Leuchtmittel als ein Leuchtring ausgebildet sein kann, und etwa eine violette Signalfarbe ausgibt.

Ein Füllstandmessgerät 5 kann gemäß einer Ausführungsform der Erfindung als Master einer Master-Slave-Anordnung ausgebildet sein und mit einem Leuchtmittel ausgebildet sein, wobei das Leuchtmittel als ein Leuchtring ausgebildet sein kann, und etwa eine violette Signalfarbe ausgibt.

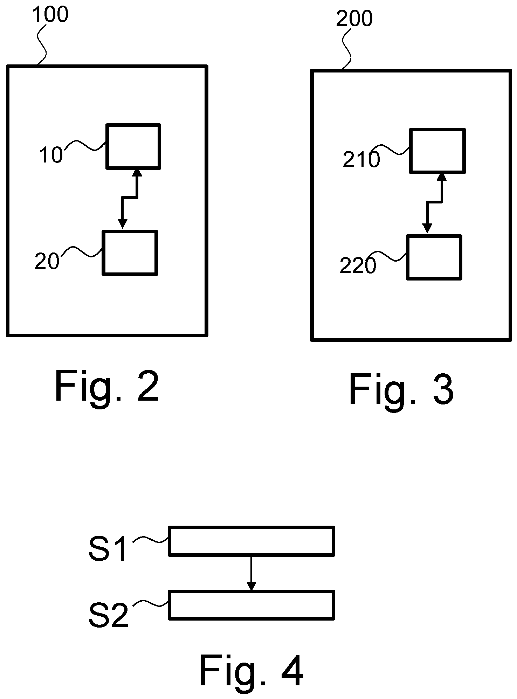

Fig. 2 zeigt eine Vorrichtung zum Bereitstellen einer Signalfarbe für ein Füllstandmessgerät gemäß einer Ausführungsform der Erfindung.

Die Vorrichtung 100 zum Bereitstellen einer Signalfarbe für ein Füllstandmessgerät umfasst eine Parametrierungseinrichtung 10 und eine Sendeeinrichtung 20.

Die Parametrierungseinrichtung 10 ist dazu ausgebildet, eine Signalfarbe für einen Verbund von Füllstandmessgeräten bereitzustellen.

Die Sendeeinrichtung 20 ist dazu ausgebildet, die bereitgestellte Signalfarbe als Signalfarbdaten an den Verbund der Füllstandmessgeräte zu übertragen.

In einer Ausführungsform der vorliegenden Erfindung ist vorgesehen, dass der Füllstand eines Behälters mit mehreren PROTRAC-Geräten ermittelt wird.

Der Begriff "PROTRAC" bezeichnet dabei Geräte für die Grenzstandserfassung mit Radiometrie. Die radiometrische Grenzstandserfassung funktioniert mit einer radiometrischen Quelle, die gebündelt Gammastrahlung aussendet. Die Strahlung wird von einem Detektor auf der gegenüberliegenden Seite des Behälters empfangen. Wird die Strahlung vom Füllgut blockiert, empfängt der Detektor weniger oder keine Strahlung. Diese Intensitätsänderungen werden von einem Relais als Signale weitergeleitet.

Dazu sind drei SOLITRAC-Geräte (Summierung) und ein weiteres Gerät zur Fremdstrahlungserkennung miteinander verbunden gemäß einer weiteren Ausführungsform der vorliegenden Erfindung.

Der Begriff "SOLITRAC" bezeichnet dabei Geräte bzw. radiometrische Sensoren mit PVT-Stabdetektor zur kontinuierlichen Messung von Flüssigkeiten und Schüttgütern. Er eignet sich zur Füllstandmessung bei extremen Prozesstemperaturen, bei kritischen Produkteigenschaften oder von aggressiven Medien, somit ideal für den Einsatz in zylindrischen Behältern, Reaktoren, Autoklaven, Separatoren und Mischbehältern.

In einer Ausführungsform der vorliegenden Erfindung ist vorgesehen, dass elektrische Leuchtmittel im Normalzustand in einer bestimmten Farbe leuchten.

### Ausführungsbeispiele und Szenarien

Wird beispielsweise eine bestimmte Verbindung, beispielsweise eine Datenübertragungsverbindung vom Master zu einem Summierungs-Slave der Master-Slave-Anordnung der Füllstandmessgeräte, unterbrochen, so wird dies vom System erkannt, und der Master der Master-Slave-Anordnung der Füllstandmessgeräte geht in Störung bzw. in einen Störungsmodus und die Anzeige wechselt die Farbe auf beispielsweise auf einen Farbwert "rot", gemäß einer weiteren Ausführungsform der vorliegenden Erfindung.

In einer Ausführungsform der vorliegenden Erfindung ist vorgesehen, dass den anderen noch am Bus vorhandenen Geräten dieser neue Farbwert per Datenübertragung übersendet wird und die Feldgeräte sind dazu ausgebildet, ebenfalls die Farbe auf einen anderen Farbton bzw. auf einen anderen Farbwert, etwa rot, zu ändern.

In einer Ausführungsform der vorliegenden Erfindung ist vorgesehen, dass an dem Flüssigkeitsbehälter etwa Leuchtmitteln von drei Füllstandsmessgeräten mit dem Farbwert "rot" aufleuchten und eine Erkennung der fehlerhaften Messung sicherer erreicht werden würde, als wenn dies Aufleuchten nur durch ein einzelnes Leuchtmittel eines Füllstandmessgerätes anzeigen würden.

In einer Ausführungsform der vorliegenden Erfindung ist vorgesehen, dass das als Master eingesetzte Füllstandsmessgerät bzw. dessen elektrisches Leuchtmittel zusätzlich abwechselnd mit dem Farbwert "rot" und mit dem Farbwert "violett" blinken kann. Damit ist vorteilhaft erkennbar, dass der Master den Fehler verursacht hat.

Das Füllstandsmessgerät, das sich nicht mehr am Bus befindet würde weiterhin mit dem Farbwert "violett" leuchten und es wäre erkennbar, dass es nicht mehr durch den Master erreichbar ist.

In einer Ausführungsform der vorliegenden Erfindung ist vorgesehen, dass alle Füllstandsmessgeräte im Master/Slave System mit dem Farbwert "violett" aufleuchten, zur Anzeige der Signalfarbe.

In einer Ausführungsform der vorliegenden Erfindung ist vorgesehen, dass das Fremdstrahlungsgerät eine Fremdstrahlung detektiert und dazu ausgebildet ist, die Anlage in einen entsprechenden Störzustand zu versetzen und entsprechend eine Fehlerfarbe bzw. einen Fehlerfarbwert anzuzeigen.

In einer Ausführungsform der vorliegenden Erfindung ist vorgesehen, dass das Fremdstrahlungsgerät in einer Fehlerfarbe aufblinkt. Dies ermöglicht, dass es ersichtlich gemacht wird, dass eine Fremdstrahlung vorliegt bzw. auf einen Sensor des Füllstandmessgerätes eingewirkt hat.

Fig. 3 zeigt ein Füllstandmessgerät gemäß einer Ausführungsform der Erfindung.

Das Füllstandmessgerät 200 zur Bestimmung eines Füllstandes eines Mediums umfasst eine Empfangseinrichtung 210 und eine Anzeigeneinrichtung 220.

Die Empfangseinrichtung 210 ist dazu ausgebildet, die Farbdaten von einer Vorrichtung 100 zu empfangen.

Die Anzeigeneinrichtung 220 ist dazu ausgebildet, die empfangenen Signalfarbdaten und/oder Fehlerfarbdaten anzuzeigen und eine Signalfarbe und/oder eine Fehlerfarbe auszugeben.

Die Anzeigeneinrichtung 220 ist beispielsweise dazu ausgebildet, die als NAMUR-Signalanzeige verwendet zu werden.

Der Begriff NAMUR bezeichnet dabei die "Normenarbeitsgemeinschaft für Mess- und Regeltechnik in der Chemischen Industrie".

Der Verband unterstützt vorrangig die Belange der Prozessindustrie in Bezug auf Normung, Geräte, Messverfahren oder ähnliches. Mit dem Begriff NAMUR-Signalanzeige werden im Sinne der Beschreibung der vorliegenden Patentanmeldung ferner elektronische Komponenten umfasst, die dazu ausgebildet sind, nach NAMUR definierte oder genormte Farben anzuzeigen und/oder nach NAMUR definierte oder genormte Farben oder Symbole auszugeben.

Ferner werden mit dem Begriff "NAMUR-Signalanzeige" elektronische Anzeigekomponenten umfasst, die mit definierten Mindest- oder Maximal Strom- oder Leistungswerten betrieben zu werden.

Ferner werden mit dem Begriff "NAMUR-Signalanzeige" elektronische Anzeigekomponenten umfasst, die Signalpegel und die Ausfallinformation von digitalen Messumformern mit analogem Ausgangssignal nach NAMUR definierte oder genormte Farben anzeigen können, z.B. Ausfall des Messumsetzers, Fehler in Verbindungsleitungen, Ausfall von Hilfsenergien etc. Die Ausfallinformation sagt aus, dass ein Fehler im Messsystem vorliegt.

Fig. 4 ein Flussdiagramm ein Flussdiagramm eines Verfahrens zum Bereitstellen einer Signalfarbe für ein Füllstandmessgerät.

Das Verfahren zum Bereitstellen einer Signalfarbe für ein Füllstandmessgerät weist folgende Verfahrensschritte auf:
Als ein erster Schritt des Verfahrens erfolgt ein Bereitstellen S1 einer Signalfarbe für einen Verbund von Füllstandmessgeräten.

Als ein zweiter Schritt des Verfahrens erfolgt ein Übertragen S2 der bereitgestellten Signalfarbe als Signalfarbdaten an den Verbund der Füllstandmessgeräte zu übertragen.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Vorrichtung (100) zum Bereitstellen mindestens einer Signalfarbe für ein Füllstandmessgerät, wobei die Vorrichtung (100) umfasst:
- eine Parametrierungseinrichtung (10), welche dazu ausgebildet ist, eine Signalfarbe für einen Verbund von Füllstandmessgeräten bereitzustellen; und
- eine Sendeeinrichtung (20), welche dazu ausgebildet ist, die bereitgestellte Signalfarbe als Signalfarbdaten an den Verbund der Füllstandmessgeräte zu übertragen.

2. Vorrichtung (100) nach Anspruch 1,
wobei die Parametrierungseinrichtung (10) dazu ausgebildet ist, die Signalfarbe als Farbe zur Identifizierung eines Master-Slave-Verbundes der Füllstandmessgeräte bereitzustellen.

3. Vorrichtung (100) nach einem der vorhergehenden Ansprüche, wobei die Sendeeinrichtung (20) dazu ausgebildet ist, die Signalfarbdaten synchron, asynchron oder zyklisch zu übertragen.

4. Vorrichtung (100) nach einem der vorhergehenden Ansprüche,
wobei die Parametrierungseinrichtung (10) ferner dazu ausgebildet ist, mindestens eine Fehlerfarbe für den Verbund der Füllstandmessgeräten bereitzustellen und die Sendeeinrichtung (20) ist ferner dazu ausgebildet, die bereitgestellte Fehlerfarbe als Fehlerfarbdaten an den Verbund der Füllstandmessgeräte zu übertragen.

5. Vorrichtung (100) nach Anspruch 4, wobei die Sendeeinrichtung (20) dazu ausgebildet ist, die Fehlerfarbdaten synchron, asynchron oder zyklisch zu übertragen.

6. Vorrichtung (100) nach einem der vorhergehenden Ansprüche, wobei die Signalfarbdaten für ein Füllstandmessgerät dazu geeignet sind, eine Zugehörigkeit des Füllstandmessgerätes zu dem Verbund der Füllstandmessgeräte anzuzeigen.

7. Füllstandmessgerät (200) zur Bestimmung eines Füllstandes eines Mediums, das Füllstandmessgerät (200) aufweisend:
- eine Empfangseinrichtung (210), welche dazu ausgebildet ist, Farbdaten von einer Vorrichtung (100) nach einem der vorhergehenden Ansprüche zu empfangen.

8. Füllstandmessgerät (200) nach Anspruch 7,
wobei das Füllstandmessgerät (200) ferner aufweist:
- eine Anzeigeneinrichtung (220), welcher dazu ausgebildet ist, die empfangenen Signalfarbdaten und/oder Fehlerfarbdaten anzuzeigen und eine Signalfarbe und/oder eine Fehlerfarbe auszugeben.

9. Füllstandmessgerät (200) nach Anspruch 7 oder 8,
wobei die Anzeigeneinrichtung (220) als eine Leuchtanzeige oder als Hintergrundbeleuchtung eines Displays des Füllstandmessgerätes (200) ausgebildet ist.

10. Verfahren zum Bereitstellen einer Signalfarbe für ein Füllstandmessgerät,
wobei das Verfahren folgende Verfahrensschritte aufweist:
- Bereitstellen (S1) von mindestens einer Signalfarbe für einen Verbund von Füllstandmessgeräten; und
- Übertragen (S2) der bereitgestellten Signalfarbe als Signalfarbdaten an den Verbund der Füllstandmessgeräte.

11. Verfahren nach Anspruch 10,
wobei ferner die Signalfarbe als Farbe zur Identifizierung eines Master-Slave-Verbundes der Füllstandmessgeräte bereitgestellt wird.

12. Verfahren nach Anspruch 10 oder 11,
wobei die Signalfarbdaten synchron, asynchron oder zyklisch übertragen werden.

13. Verfahren nach einem der vorhergehenden Ansprüche 10 bis 12, wobei mindestens eine Fehlerfarbe für den Verbund der Füllstandmessgeräten bereitgestellt wird und die bereitgestellte Fehlerfarbe als Fehlerfarbdaten an den Verbund der Füllstandmessgeräte übertragen wird.

14. Verfahren nach Anspruch 13,
wobei die Fehlerfarbdaten synchron, asynchron oder zyklisch übertragen werden.

15. Computerlesbares Speichermedium, umfassend Befehle, die bei der Ausführung durch einen Computer diesen veranlassen, dass die Schritte des Verfahrens nach einem der vorhergehenden Ansprüche 10 bis 14 ausgeführt werden.
